(19) Europäisches Patentamt
European Patent Office
Office européen des brevets

(11) **EP 3 324 529 A1**

(12) **EUROPEAN PATENT APPLICATION**

(43) Date of publication:
**23.05.2018 Bulletin 2018/21**

(51) Int Cl.:
*H02M 1/36* (2007.01)          *H02M 7/797* (2006.01)
*H02M 7/5387* (2007.01)

(21) Application number: **16199719.2**

(22) Date of filing: **21.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ABB Schweiz AG**
**5400 Baden (CH)**

(72) Inventors:
• **Jussila, Matti T.**
  **00380 Helsinki (FI)**
• **Qvintus, Mikko**
  **00380 Helsinki (FI)**
• **Kukkola, Jarno**
  **02650 Espoo (FI)**

(74) Representative: **Kolster Oy Ab**
  **(Salmisaarenaukio 1)**
  **P.O. Box 204**
  **00181 Helsinki (FI)**

(54) **METHOD OF ESTIMATING DC-LINK CAPACITANCE OF CONVERTER ASSEMBLY AND CONVERTER ASSEMBLY**

(57)    A method of estimating DC-link capacitance of a converter assembly, the converter assembly comprising a converter (EC) adapted to convert electric energy from one form to another, the converter (EC) has a first power connection (T1) which is a direct current connection, and a second power connection (T2), and a DC-link capacitor (C1) operationally connected to the first power connection (T1) of the converter (EC). The method comprises determining an initial voltage ($u_{C1\_t0}$) of the DC-link capacitor (C1), effecting a voltage change of the DC-link capacitor (C1) in order to alter charge of the DC-link capacitor (C1), determining a final voltage ($u_{C1\_t1}$) of the DC-link capacitor (C1), and calculating a capacitance ($C_{C1}$) of the DC-link capacitor (C1) using the initial voltage ($u_{C1\_t0}$) and final voltage ($u_{C1\_t1}$) of the DC-link capacitor (C1) and energy transition required for the voltage change of the DC-link capacitor (C1).

Fig. 1

EP 3 324 529 A1

**Description**

FIELD OF THE INVENTION

The present invention relates to a method of estimating DC-link capacitance of a converter assembly, and to a converter assembly implementing the method.

A capacitance value of a DC link capacitor may differ substantially from a rating plate value, and the capacitance value also changes during an operating life of the DC link capacitor. Condition monitoring of a DC link capacitor requires information about capacitance value of the DC link capacitor. Further, a DC link voltage controller of the converter assembly requires the DC link capacitance value.

A known method of determining DC-link capacitance of a converter assembly requires disconnecting a DC-link capacitor for a measurement.

BRIEF DESCRIPTION OF THE INVENTION

An object of the present invention is to provide a method of estimating capacitance of a DC-link capacitor without disconnecting the DC-link capacitor, and a converter assembly implementing the method. The objects of the invention are achieved by a method and converter assembly which are characterized by what is stated in the independent claims. The preferred embodiments of the invention are disclosed in the dependent claims.

The invention is based on the idea of effecting a voltage change of a DC-link capacitor, the voltage change having a known value, and calculating a capacitance of the DC-link capacitor using the known value of the voltage change and an energy transition required for the voltage change.

An advantage of the method and converter assembly of the invention is that a capacitance of a DC-link capacitor can be estimated without disconnecting the DC-link capacitor. In some embodiments a capacitance of a DC-link capacitor can be estimated without any additional instrumentation, simply by providing a controller of a converter with software adapted to implement a method according to the invention. This results from the fact that many modern converter assemblies provided with a DC-link capacitor have all the hardware required for implementation of the invention, including means for measuring a voltage of the DC-link capacitor, means for measuring power transferred by the converter assembly, and capability to control power transfer between a converter of the assembly and the DC-link capacitor.

BRIEF DESCRIPTION OF THE DRAWINGS

In the following the invention will be described in greater detail by means of preferred embodiments with reference to the attached drawings, in which

Figure 1 shows a converter assembly according to an embodiment of the invention; and
Figure 2 is a graph showing values of selected electrical quantities in the converter assembly of Figure 1 during a process for estimating DC-link capacitance.

DETAILED DESCRIPTION OF THE INVENTION

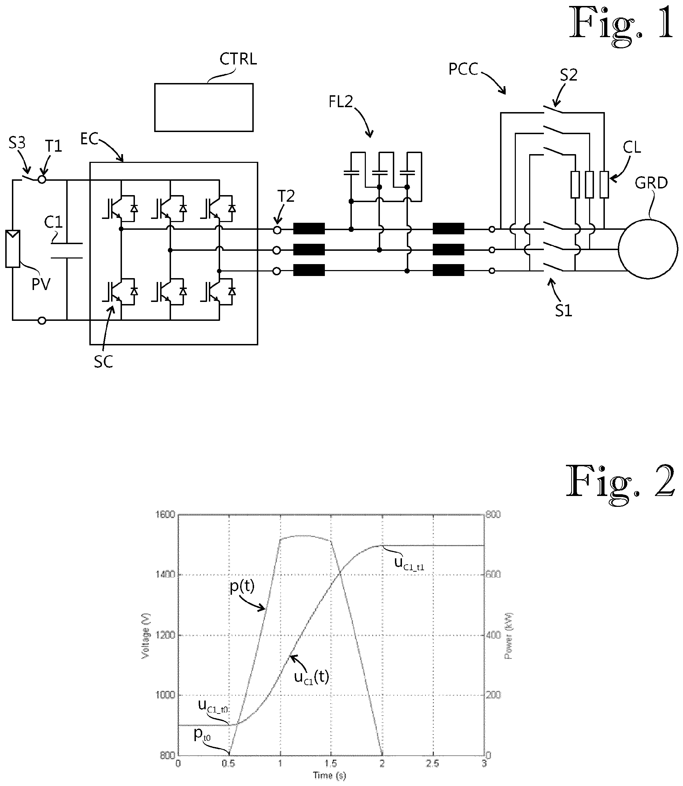

Figure 1 shows a converter assembly comprising a converter EC adapted to convert electric energy from one form to another, a DC-link capacitor C1, a controller CTRL adapted to control the converter EC, a filter device FL2 and a pre-charging circuit PCC adapted to pre-charge the DC-link capacitor C1. The converter EC has a first power connection T1 which is a direct current connection, and a second power connection T2. The converter EC is adapted to transfer electric power between the first power connection T1 and the second power connection T2. The converter EC comprises a plurality of controllable switches SC arranged in a bridge connection, the bridge connection being electrically connected between the first power connection T1 and the second power connection T2. Each of the plurality of controllable switches has a flyback diode connected antiparallel with the controllable switch.

The converter assembly is connected between a solar power station PV and a three-phase electrical power network GRD for transferring electric power from the solar power station PV to the three-phase electrical power network GRD. The first power connection T1 is connected to the solar power station PV, and the second power connection T2 is connected to the three-phase electrical power network GRD through the filter device FL2 and the pre-charging circuit PCC. In an alternative embodiment a converter assembly is adapted to be connected between a direct-current supply and an electrical power network, the direct-current supply comprising a photovoltaic generator, a fuel cell, an energy storage system etc.

The DC-link capacitor C1 is operationally connected to the first power connection T1 of the converter EC in order to enable transfer of direct current between the converter EC and the DC-link capacitor C1. The DC-link capacitor C1 is connected in parallel with the first power connection T1 such that one terminal of the DC-link capacitor C1 is electrically conductively connected to a positive terminal of the first power connection T1, and the other terminal of the DC-link capacitor C1 is electrically conductively connected to a negative terminal of the first power connection T1.

The filter device FL2 is connected to the second power connection T2. The filter device FL2 is a LCL filter adapted to improve quality of electricity passing through the filter device FL2. The filter device FL2 comprises filter inductance and filter capacitance. A structure and operation of LC and LCL filters are well known in the art, and therefore they are not described herein.

The pre-charging circuit PCC is connected operationally between the electrical power network GRD and the filter device FL2. There is a grid switch device S1 connected in parallel with the pre-charging circuit PCC. The pre-charging circuit PCC is adapted to pre-charge the DC-link capacitor C1 before commissioning of the converter assembly. The pre-charging circuit PCC comprises a current limiting device CL and a pre-charging switch device S2 adapted to connect the electrical power network GRD to the DC-link capacitor C1 through the current limiting device CL. The current limiting device CL comprises a current limiting resistor per each phase. The controller CTRL is adapted to control the grid switch device S1 and the pre-charging switch device S2.

The controller CTRL can effect a change in the voltage level of the DC-link capacitor C1 by switching the pre-charging switch device S2 to a conductive state for a predetermined time or until a voltage of the DC-link capacitor C1 exceed a predetermined voltage value, and thus allowing current from the electrical power network GRD to flow to the DC-link capacitor C1 via the flyback diodes of the converter bridge thus charging the DC-link capacitor C1. Since the current flows via the converter bridge during the pre-charging, the power transfer from the electrical power network GRD to the DC-link capacitor C1 can be determined by power measurement of the converter EC realized by the controller CTRL. Therefore the controller CTRL is able to determine both a voltage change in the DC-link capacitor C1 during the pre-charging and a power transfer effecting the voltage change of the DC-link capacitor C1. The controller CTRL can thus calculate the capacitance value of the DC-link capacitor C1 by using the determined voltage change of the DC-link capacitor C1 during the pre-charging and the determined power transfer effecting the voltage change of the DC-link capacitor C1.

In an alternative embodiment a pre-charging circuit is connected operationally between an electrical power network and a converter. A filter device, if any, can be connected between the electrical power network and the pre-charging circuit.

In an alternative embodiment a pre-charging circuit is operationally connected in parallel with a first power connection contactor adapted to electrically connect a first power connection to a direct-current supply. A power transfer from the direct-current supply through the pre-charging circuit to the DC-link capacitor effecting a voltage change in the DC-link capacitance can be in this embodiment determined by a DC power measurement of the converter assembly.

The controller CTRL is adapted to determine an initial voltage $u_{C1\_t0}$ of the DC-link capacitor C1, effect a voltage change of the DC-link capacitor C1 in order to alter charge of the DC-link capacitor C1, determine a final voltage $u_{C1\_t1}$ of the DC-link capacitor C1, and calculate a capacitance $C_{C1}$ of the DC-link capacitor C1 using the initial voltage $u_{C1\_t0}$ and the final voltage $u_{C1\_t1}$ of the DC-link capacitor C1 and energy transition required for the voltage change of the DC-link capacitor C1. The initial voltage $u_{C1\_t0}$ of the DC-link capacitor C1 is a voltage of the DC-link capacitor C1 at a starting time of said voltage change effected by the controller CTRL. The final voltage $u_{C1\_t1}$ of the DC-link capacitor C1 is a voltage of the DC-link capacitor C1 at the end of said voltage change effected by the controller CTRL.

The voltage change of the DC-link capacitor C1 is a substantially unidirectional process in which voltage of the DC-link capacitor C1 is either raised or lowered. The unidirectionality is a practical choice because only information relating to initial voltage and final voltage is needed for calculating a capacitance of the DC-link capacitor C1.

During the voltage change of the DC-link capacitor C1 the controller CTRL is adapted to keep a power transfer between the converter assembly and a direct current network connected to the first power connection T1 substantially constant. In an embodiment the controller CTRL is adapted to prevent all power transmission through the first power connection T1 during the voltage change of the DC-link capacitor C1 such that there is no power passing through the first power connection T1 in or out of the converter assembly. Said prevention of all power transmission through the first power connection T1 can be realized by controlling a first power connection contactor S3 into an open position, the first power connection contactor S3 being a contactor adapted to electrically connect the first power connection T1 to the solar power station PV. The first power connection contactor S3 is adapted to be controlled by the controller CTRL. When the first power connection contactor S3 is in an open state, the converter assembly is disconnected from the solar power station PV. In an alternative embodiment a first power connection contactor is a contactor adapted to electrically connect a first power connection to a direct current network comprising a direct-current supply.

During the voltage change of the DC-link capacitor C1 power is transferred between the three-phase electrical power network GRD and the DC-link capacitor C1. In case power is transferred from the three-phase electrical power network GRD to the DC-link capacitor C1, current is flowing through the flyback diodes connected antiparallel with the controllable switches SC.

The controller CTRL is adapted to calculate a capacitance $C_{C1}$ of the DC-link capacitor C1 by equation

$$C_{C1} = 2\, \frac{\int_{t0}^{t1}[p_{t0}+p_{l\_t0}-p(t)-p_l(t)]dt}{u_{C1\_t1}^2 - u_{C1\_t0}^2}, \qquad\qquad \{1\}$$

where $p_{t0}$ is an initial power passing through the second power connection T2, $p(t)$ is a power passing through the second power connection T2 at time t, $p_{l\_t0}$ is an initial power loss of the converter EC, $p_l(t)$ is a power loss of the converter EC at time t, $u_{C1\_t0}$ is the initial voltage of the DC-link capacitor C1, and $u_{C1\_t1}$ is the final voltage of the DC-link capacitor C1. In the equation {1}, initial values indicate values at the starting time of said voltage change effected by the controller CTRL. Values at time "t" indicate values during said voltage change effected by the controller CTRL.

The converter assembly comprises sensors, data connections and data processors for providing the controller CTRL with information necessary for utilizing the equation {1}. Said sensors, data connections and data processors are well known in the art, and they are not depicted in Figure 1. Current and voltage measurement sensors needed for determining the AC power can be operationally connected directly to the second power connection T2 or alternatively operationally between the filter device FL2 and the electrical power network GRD. In order to increase accuracy of the AC power measurement, the measurement point should be chosen as close as possible to the DC-link capacitor. For the same reason the current and voltage sensors needed for determining the DC power transfer via the first power connection T1 should be operationally connected as close to the DC-link capacitor as possible. In an embodiment current and voltage sensors needed for determining the DC power transfer via a first power connection are operationally connected directly to the first power connection.

Figure 2 shows a power passing through the second power connection T2 and voltage of the DC-link capacitor C1 as a function of time during the voltage change effected by the controller CTRL. A curve illustrating said power is denoted as $p(t)$, and a curve illustrating said voltage is denoted as $u_{C1}(t)$. In Figure 2 the voltage change effected by the controller CTRL starts at 0,5s and ends at 2,0s.

In the converter assembly of Figure 1 a voltage $u_{C1}$ of the DC-link capacitor C1 is equal to a voltage of the first power connection T1, and therefore the voltage of the first power connection T1 could be used in equation {1} instead of the voltage $u_{C1}$. In alternative embodiments there is impedance between terminals of a DC-link capacitor and a first power connection. This impedance can be caused by conductor impedance and/or contactor impedance, for example. Knowledge relating to said impedances is useful in embodiments where voltage information is only available for the first power connection, and not directly for the DC-link capacitor itself.

In an embodiment where power loss of a converter is so small that it can be ignored, the equation {1} can be rewritten in form

$$C_{C1} = 2\, \frac{\int_{t0}^{t1}[p_{t0}-p(t)]dt}{u_{C1\_t1}^2 - u_{C1\_t0}^2}\,. \qquad\qquad \{2\}$$

It might not always be possible to measure a power loss of a converter during a voltage change of a DC-link capacitor. In an embodiment a power loss of a converter is assumed to change linearly during a voltage change of a DC-link capacitor effected by a controller. In this embodiment the equation {1} can be rewritten in form

$$C_{C1} = 2\, \frac{\int_{t0}^{t1}[p_{t0}-p(t)]dt - \frac{p_{l\_t1}-p_{l\_t0}}{2}(t1-t0)}{u_{C1\_t1}^2 - u_{C1\_t0}^2}, \qquad\qquad \{3\}$$

where $p_{l\_t0}$ is an initial power loss of the converter at time t0, $p_{l\_t1}$ is a final power loss of the converter at time t1, t0 is a starting time of the voltage change effected by a controller of the converter, and t1 is an ending time of the voltage change effected by the controller. It should be noted that equations {2} and {3} are only examples of forms in which equation {1} can be rewritten by making suitable assumptions and/or simplifications.

In order to determine reliably the initial voltage $u_{C1\_t0}$ of the DC-link capacitor C1, the controller CTRL is adapted to keep a voltage of the DC-link capacitor C1 constant for a first period previous to effecting the voltage change of the DC-link capacitor C1. Purpose of the first period is to provide time for any transients to damp sufficiently. A length of the first period is 5ms. A sufficient length of a first period depends on components of the converter assembly in question. In some embodiments a first period can be even shorter than 1ms.

The controller CTRL is adapted to control the converter EC with a DC-link voltage reference signal which is a reference signal for a voltage of the DC-link capacitor C1. The converter EC is adapted to operate as an inverter for inverting a direct current inputted through the first power connection T1 into an alternating current outputted through the second power connection T2. The converter EC is further adapted to operate as a rectifier for rectifying an alternating current inputted through the second power connection T2 into a direct current outputted through the first power connection T1.

The controller CTRL is adapted to alter the DC-link voltage reference signal gradually during the voltage change of the DC-link capacitor C1. Rate of change of the DC-link voltage reference signal is selected such that current of each component in the converter assembly remains under a maximum rated current of the component in question. In an embodiment DC-link voltage reference signal is altered 1000V/s. In alternative embodiments DC-link voltage reference signal is altered between 500-3000V/s.

The controller CTRL is adapted to keep a voltage of the DC-link capacitor C1 constant for a second period after effecting the voltage change of the DC-link capacitor C1. The second period enables a reliable determination of the final voltage $u_{C1\_t1}$ of the DC-link capacitor C1. A length of the second period is 5ms. A sufficient length of a second period depends on components of the converter assembly in question. In some embodiments a second period can be even shorter than 1ms.

The controller CTRL is adapted to effect the voltage change of the DC-link capacitor C1 by controlling the converter EC and/or the pre-charging circuit PCC. Herein controlling of the converter EC means controlling the plurality of controllable switches SC, and controlling of the pre-charging circuit PCC means controlling the grid switch device S1 and the pre-charging switch device S2.

The voltage change of the DC-link capacitor C1 can be effected by supplying energy into the DC-link capacitor C1, or by absorbing energy from the DC-link capacitor C1. When all power transfer through the first power connection T1 in or out of the converter assembly is prevented, supplying energy into the DC-link capacitor C1 means transferring energy from the electrical power network GRD into the DC-link capacitor C1. Similarly absorbing energy from the DC-link capacitor C1 means transferring energy from the DC-link capacitor C1 into the electrical power network GRD.

In an embodiment a voltage change of the DC-link capacitor is effected by transferring energy both between the DC-link capacitor and a direct current network connected to the first power connection and between the DC-link capacitor and an electrical power network connected to the second power connection. In this embodiment the controller of the converter assembly is adapted to calculate a capacitance of the DC-link capacitor by equation

$$C_{C1} = 2\,\frac{\int_{t0}^{t1}[p_{DC}(t)-p(t)]dt}{u_{C1\_t1}^2 - u_{C1\_t0}^2}, \qquad\qquad \{4\}$$

where $p_{DC}(t)$ is a power passing through the first power connection T1 at time t. Equation {4} assumes that power loss of the converter is insignificant. In an alternative embodiment a voltage change of the DC-link capacitor is effected by transferring energy solely between the DC-link capacitor and a direct current network connected to the first power connection.

The converter EC is adapted to co-operate with the filter device FL2 for providing a raised voltage to the DC-link capacitor C1, the raised voltage being higher than a peak value of an alternating voltage present in the electrical power network GRD connected to the second power connection T2. The co-operation is enabled by the fact that the filter device FL2 is located electrically between the converter EC and the electrical power network GRD. The controller CTRL is adapted to utilize said co-operation between the converter EC and the filter device FL2 such that either the initial voltage $u_{C1\_t0}$ of the DC-link capacitor C1 or the final voltage $u_{C1\_t1}$ of the DC-link capacitor C1 is an above defined raised voltage. Using the raised voltage enables providing larger difference between the initial voltage $u_{C1\_t0}$ of the DC-link capacitor C1 and the final voltage $u_{C1\_t1}$ of the DC-link capacitor C1, which in turn facilitates accuracy of the equation {1}. Realizing above mentioned co-operation between a converter and an LCL-filter is well known in the art, and therefore it is not described herein.

As mentioned above, a difference between the initial voltage $u_{C1\_t0}$ of the DC-link capacitor C1 and the final voltage $u_{C1\_t1}$ of the DC-link capacitor C1 affects accuracy of the equation {1}. A magnitude of the voltage change of the DC-link capacitor C1 effected by the controller CTRL is selected such that the capacitance $C_{C1}$ of the DC-link capacitor C1 can be determined with sufficient accuracy. In an embodiment a magnitude of the voltage change of the DC-link capacitor effected by the controller is equal to or greater than five percent of a nominal voltage of the DC-link capacitor. In an alternative embodiment a magnitude of the voltage change of the DC-link capacitor effected by the controller is equal to or greater than 50V.

The determination of a DC-link capacitance according to the invention can be executed as a part of a routine operation of a converter assembly. Estimation of a DC-link capacitance of a converter assembly can be executed at predetermined time intervals. In an embodiment the converter assembly comprises a photovoltaic inverter, and estimation of a DC-link capacitance of the converter assembly is executed every day as a part of a start-up routine of the converter assembly. Photovoltaic inverters are often disconnected from photovoltaic array during night time and the inverter DC-link capacitance needs to be pre-charged prior to starting the actual power feed from the photovoltaic array to the electrical power network.

In an embodiment a converter assembly comprises a photovoltaic inverter which is adapted to disconnect itself from the photovoltaic array for night and start-up in the morning by first pre-charging the DC-link either from the photovoltaic array or from the electrical power network. A controller of the photovoltaic inverter is adapted to substantially match a voltage of the DC-link capacitor with an open circuit voltage of the photovoltaic array prior to controlling the first power connection contactor to a conductive state. The controller of the photovoltaic inverter is adapted to realize said matching by generating an appropriate DC-link voltage reference signal such that a voltage of the DC-link capacitor matches a measured open circuit voltage of the photovoltaic array. The photovoltaic inverter can, for example, determine the DC-link capacitance during the DC-link voltage raise required by the voltage matching. Alternatively the determination of the DC-link capacitance can be initiated on demand, controlled by a user or a higher level control system such as a SCADA.

It will be obvious to a person skilled in the art that the inventive concept can be implemented in various ways. The invention and its embodiments are not limited to the examples described above but may vary within the scope of the claims.

**Claims**

1.  A method of estimating DC-link capacitance of a converter assembly, the converter assembly comprising
    a converter (EC) adapted to convert electric energy from one form to another, the converter (EC) has a first power connection (T1) which is a direct current connection, and a second power connection (T2); and
    a DC-link capacitor (C1) operationally connected to the first power connection (T1) of the converter (EC),
    **characterized in that** the method comprises:

    determining an initial voltage ($u_{C1\_t0}$) of the DC-link capacitor (C1);
    effecting a voltage change of the DC-link capacitor (C1) in order to alter charge of the DC-link capacitor (C1);
    determining a final voltage ($u_{C1\_t1}$) of the DC-link capacitor (C1); and
    calculating a capacitance ($C_{C1}$) of the DC-link capacitor (C1) using the initial voltage ($u_{C1\_t0}$) and final voltage ($u_{C1\_t1}$) of the DC-link capacitor (C1) and energy transition required for the voltage change of the DC-link capacitor (C1).

2.  A method according to claim 1, **characterized in that** during the voltage change of the DC-link capacitor (C1) a power transfer between the converter assembly and a direct current network connected to the first power connection (T1) is kept substantially constant.

3.  A method according to claim 2, **characterized in that** during the voltage change of the DC-link capacitor (C1) there is no power passing through the first power connection (T1) in or out of the converter assembly.

4.  A method according to claim 3, **characterized in that** the capacitance ($C_{C1}$) of the DC-link capacitor (C1) is obtainable by equation

$$C_{C1} = 2\,\frac{\int_{t0}^{t1}[p_{t0}+p_{l\_t0}-p(t)-p_l(t)]dt}{u_{C1\_t1}^2 - u_{C1\_t0}^2},$$

where $p_{t0}$ is an initial power passing through the second power connection (T2), $p(t)$ is a power passing through the second power connection (T2) at time t, $p_{l\_t0}$ is an initial power loss of the converter (EC), $p_l(t)$ is a power loss of the converter (EC) at time t, $u_{C1\_t0}$ is the initial voltage of the DC-link capacitor (C1), and $u_{C1\_t1}$ is the final voltage of the DC-link capacitor (C1).

5.  A method according to claim 4, **characterized in that** the method comprises keeping a voltage of the DC-link capacitor (C1) constant for a first period previous to effecting the voltage change of the DC-link capacitor (C1), a length of the first period being selected to enable a reliable determination of the initial voltage $u_{C1\_t0}$ of the DC-link capacitor (C1).

6.  A method according to any one of preceding claims, **characterized in that** effecting the voltage change of the DC-link capacitor (C1) is realized by controlling the converter (EC), and/or by controlling a pre-charging circuit (PCC) adapted to pre-charge the DC-link capacitor (C1) from an electrical power network (GRD) connected to the second power connection (T2).

7.  A method according to any one of claims 4 to 6, **characterized in that** the method comprises keeping a voltage of the DC-link capacitor (C1) constant for a second period after effecting the voltage change of the DC-link capacitor (C1), a length of the second period being selected to enable a reliable determination of a final voltage $u_{C1\_t1}$ of the DC-link capacitor (C1).

8. A converter assembly comprising:

a converter (EC) adapted to convert electric energy from one form to another, the converter (EC) has a first power connection (T1) which is a direct current connection, and a second power connection (T2);
a DC-link capacitor (C1) operationally connected to the first power connection (T1) of the converter (EC), and a controller (CTRL) adapted to control the converter (EC);

**characterized in that** the controller (CTRL) is adapted to:

determine an initial voltage ($u_{C1\_t0}$) of the DC-link capacitor (C1);
effect a voltage change of the DC-link capacitor (C1) in order to alter charge of the DC-link capacitor (C1);
determine a final voltage ($u_{C1\_t1}$) of the DC-link capacitor (C1); and
calculate a capacitance ($C_{C1}$) of the DC-link capacitor (C1) using the initial voltage ($u_{C1\_t0}$) and final voltage ($u_{C1\_t1}$) of the DC-link capacitor (C1) and energy transition required for the voltage change of the DC-link capacitor (C1).

9. A converter assembly according to claim 8, **characterized in that** the controller (CTRL) is adapted to control the converter (EC) with a DC-link voltage reference signal which is a reference signal for a voltage of the DC-link capacitor (C1).

10. A converter assembly according to claim 8 or 9, **characterized in that** the converter (EC) is adapted to operate as an inverter for inverting a direct current inputted through the first power connection (T1) into an alternating current outputted through the second power connection (T2).

11. A converter assembly according to claim 10, **characterized in that** the converter assembly comprises a filter device (FL2) operationally connected to the second power connection (T2), the filter device (FL2) comprising filter inductance and filter capacitance, and in a situation where an electrical power network (GRD) is connected to the second power connection (T2) through the filter device (FL2), the converter (EC) is adapted to co-operate with the filter device (FL2) for providing a raised voltage to the DC-link capacitor (C1), the raised voltage being higher than a peak value of an alternating voltage present in the electrical power network (GRD) connected to the second power connection (T2) through the filter device (FL2).

12. A converter assembly according to claim 10 or 11, **characterized in that** the converter assembly is adapted to be connected between a solar power station (PV) and an electrical power network (GRD) for transferring electric power from the solar power station (PV) to the electrical power network (GRD), and the controller (CTRL) is adapted to carry out the estimation of the DC-link capacitance of the converter assembly as a part of a start-up routine of the converter assembly.

13. A converter assembly according to any one of claims 10 to 12, **characterized in that** the converter (EC) is further adapted to operate as a rectifier for rectifying an alternating current inputted through the second power connection (T2) into a direct current outputted through the first power connection (T1).

14. A converter assembly according to any one of claims 8 to 13, **characterized in that** a magnitude of the voltage change of the DC-link capacitor (C1) effected by the controller (CTRL) is equal to or greater than five percent of a nominal voltage of the DC-link capacitor (C1).

15. A converter assembly according to claim 9, **characterized in that** the controller (CTRL) is adapted to alter the DC-link voltage reference signal gradually during the voltage change of the DC-link capacitor (C1) such that a rate of change of a voltage of the DC-link capacitor (C1) remains under a predetermined limit value.

Fig. 1

Fig. 2

Europäisches
Patentamt

European
Patent Office

Office européen
des brevets

# EUROPEAN SEARCH REPORT

Application Number

EP 16 19 9719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/072403 A1 (NIWA MASAKAZU [JP]) 10 March 2016 (2016-03-10) <br> * paragraph [0002] * <br> * paragraph [0008] - paragraph [0012] * <br> * paragraph [0031] - paragraph [0056] * <br> * paragraph [0065] * <br> * figure 1 * | 1-15 | INV. <br> H02M1/36 <br> H02M7/797 <br><br> ADD. <br> H02M7/5387 |
| A | US 2016/254780 A1 (ITO TOMOMICHI [JP] ET AL) 1 September 2016 (2016-09-01) <br> * paragraph [0026] - paragraph [0042] * <br> * paragraph [0082] * <br> * figures 1,2 * | 12 | |
| A | WO 2010/055556 A1 (MITSUBISHI ELECTRIC CORP [JP]; NAGATSUKA YOSHIO [JP]) 20 May 2010 (2010-05-20) <br> * the whole document * | 1-15 | |

TECHNICAL FIELDS
SEARCHED     (IPC)

H02M
G01R
H02J

The present search report has been drawn up for all claims

| Place of search | Date of completion of the search | Examiner |
|---|---|---|
| The Hague | 16 May 2017 | Lochhead, Steven |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 19 9719

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2017

| Patent document cited in search report | | | Publication date | Patent family member(s) | | | Publication date |
|---|---|---|---|---|---|---|---|
| US 2016072403 | A1 | | 10-03-2016 | CN | 105406737 | A | 16-03-2016 |
| | | | | DE | 102015011506 | A1 | 10-03-2016 |
| | | | | JP | 5931148 | B2 | 08-06-2016 |
| | | | | JP | 2016059181 | A | 21-04-2016 |
| | | | | US | 2016072403 | A1 | 10-03-2016 |
| | | | | US | 2017099012 | A1 | 06-04-2017 |
| US 2016254780 | A1 | | 01-09-2016 | JP | 2016163380 | A | 05-09-2016 |
| | | | | US | 2016254780 | A1 | 01-09-2016 |
| WO 2010055556 | A1 | | 20-05-2010 | NONE | | | |

EPO FORM P0459

For more details about this annex : see Official Journal of the European Patent Office, No. 12/82